# EUROPÄISCHE PATENTANMELDUNG

(11) **EP 2 524 586 A2**
(43) Veröffentlichungstag der Anmeldung: **21.11.2012**
(21) Anmeldenummer: 12401083.6
(22) Anmeldetag: 08.05.2012
(51) Int. Cl.: A01B 79/00

(54) **Landwirtschaftliches Gerät**

(30) Priorität: 19.05.2011 DE 102011050474
(71) Anmelder: Amazonen-Werke H. Dreyer GmbH & Co. KG, 49205 Hasbergen (DE)
(72) Erfinder: Wernsmann, Daniel, 49074 Osnabrück (DE)

(57) **Zusammenfassung**

Landwirtschaftliches Gerät, ausgestattet mit einem Satellitennavigationssystem, z.B. GPS, aufweisendes Bordcomputersystem zur Aufzeichnung und/oder Aufnahme von Daten, und zur abrufbaren Speicherung der Daten, insbesondere des Höhenprofils der Fläche, in einem Speicherelement des Bordcomputersystems, und mit Sensoren zur Bestimmung der Höhe der boden- und/oder pflanzenbearbeitenden Geräteteile, über dem Boden zur Regulierung von Betriebsparametern. Um in vorteilhafter Weise die örtlichen Flächengegebenheiten vorausschauend bei der Steuerung des Gerätes berücksichtigen zu können ist vorgesehen dass die Daten, insbesondere über das Höhenprofil der Fläche, bei dem Einsatz landwirtschaftlicher Geräte auf der landwirtschaftlichen Fläche verwendbar sind, auf der die Betriebssteuerung desselben oder anderer landwirtschaftlicher Geräte aufgrund eines im Speicher des Bordcomputersystems hinterlegten Programms durchführbar ist, wobei das verwendete landwirtschaftliche Gerät, zumindest einen Betriebsparameter aufweist, der auf dem Abstand zumindest eines Teils des landwirtschaftlichen Gerätes zum Untergrund beruht.

## Beschreibung

Die Erfindung betrifft ein landwirtschaftliches Gerät mit Satellitennavigationssystem gemäß des Oberbegriffes des Patentanspruches 1.

Die Verwendung von Satellitennavigationssystemen in der Landwirtschaft ist bekannt. Gemäß der deutschen Patentschrift DE 10 2007 049 652 A1 können beispielsweise über ein satellitengestütztes Positionsbestimmungssystem mit digitalisierter Karte Grobsteuerungen von Betriebsparametern von Düngestreuern erfolgen. Dabei werden Feldgrenzen und Höhenlinien in der digitalisierten Karte berücksichtigt. Die Steuerung dient hier dazu, eine vorgegebene Verteilung von Mineraldünger an der jeweiligen Position zu erreichen. Zusätzlich erfolgt eine Feinsteuerung aufgrund von Messdaten unterschiedlicher Sensoren.

In der EP 1 181 857 B1 wird ein Satellitennavigationssystem verwendet, um bei dem Betrieb landwirtschaftlicher Fahrzeuge bei der Einhaltung von Fahrspuren zu helfen, wobei zur Verfeinerung der Unterstützung auf weitere Sensoren zurück gegriffen wird.

Der Erfindung liegt die Aufgabe zugrunde, in vorteilhafter Weise die örtlichen Flächengegebenheiten vorausschauend bei der Steuerung des Gerätes berücksichtigen zu können.

Diese Aufgabe wird erfindungsgemäß durch das Kennzeichen des Patentanspruches 1 gelöst. Durch diese Maßnahmen wird es ermöglicht, bei beliebigen landwirtschaftlichen Geräten in vorteilhafter Weise Betriebsparameter, insbesondere solche, die die Höhe der boden- und/oder pflanzenbearbeitenden Geräteteile des landwirtschaftlichen Gerätes betreffen, zu steuern und/oder zu regeln. Dabei wird insbesondere die Höhe der boden- und/oder pflanzenbearbeitenden Geräteteile des landwirtschaftlichen Gerätes in die Berechnung der auszugebenden Steuerdaten einbezogen.

Mit einem mit einem Satellitennavigationssystem, z.B. GPS, ausgestatteten landwirtschaftlichen Gerät wird, insbesondere während der Bearbeitung einer landwirtschaftlichen Fläche, eine Karte der landwirtschaftlichen Fläche aufgezeichnet. Dabei wird insbesondere das Höhenprofil der landwirtschaftlichen Fläche aufgezeichnet. Dadurch können bei späteren Arbeiten auf der landwirtschaftlichen Fläche vor dem Erreichen und/oder während dem Überfahren bestimmter landschaftlicher Merkmale, insbesondere betreffend des Höhenprofils der landwirtschaftlichen Fläche, Steuer-und/oder Regelvorgänge der Betriebsparameter des landwirtschaftlichen Gerätes durchgeführt werden.

Die Betriebsparameter betreffen dabei insbesondere die einzustellende und/oder einzuhaltende Höhe der boden-und/oder pflanzenbearbeitenden Geräteteile des landwirtschaftlichen Gerätes. Dazu zählen beispielsweise:
- die Höhe eines Mähwerkes über dem Boden, insbesondere von Mähdreschern, einstellbar über das Anheben und/oder Absenken des Mähwerkes
- die Höhe von Pflanzenschutz- und/oder Düngemittelausbringdüsen über dem Boden, insbesondere von landwirtschaftlichen Feldspritzen, einstellbar über das Kippen von zumindest einem des die Ausbringdüsen beinhaltenden Gestänges um eine Achse und/oder das Absenken und/oder Anheben des Gestänges und/oder Teilen davon
- die Höhe der Schleuderscheiben über dem Boden, insbesondere von Schleuderstreuern, einstellbar über das Anheben und/oder Absenken der Schleuderscheiben und/oder des Schleuderstreuers und/oder über eine Veränderung der Rotationsgeschwindigkeit der Schleuderscheiben und/oder des Einstellwinkels der Wurfschaufeln
- die Höhe anderer Geräteteile, insbesondere von landwirtschaftlichen Geräten, einstellbar über geeignete Mittel

Von der Höhe über dem Boden unabhängige Betriebsparameter sind basierend auf den Daten der digitalisierten Karte ebenfalls steuerbar. Dazu gehört insbesondere das Einleiten und/oder Unterbrechen eines Ausbringvorgangs, so dass das ausgebrachte Material zu geeignetem Zeitpunkt an der Ausbringvorrichtung zur Verfügung steht. Beispielsweise derart, dass eine Sämaschine vor dem Erreichen eines Feldrandes von außerhalb des Feldes in Betrieb genommen wird, so dass Saatgut dann an der Ausbringvorrichtung zur Verfügung steht, wenn der Feldrand erreicht wird und ohne Unterbrechung direkt am Feldrand der Saatvorgang beginnt. Analoge Umsetzungen für andere landwirtschaftliche Geräte und/oder für das Verlassen einer landwirtschaftlichen Fläche, beispielsweise das Aufnehmen und/oder Unterbrechen eines Spritzvorganges mit einer Feldspritze, sind dabei natürlich ebenso naheliegend wie vorteilhaft.

Um für die spätere Verwendung verfügbar zu sein, werden die mittels des Satellitennavigationssystems aufgezeichneten Daten, insbesondere einer digitalisierten Karte, in einem Speicherelement, vorzugsweise eines Bordcomputers des landwirtschaftlichen Gerätes, hinterlegt.

Der Bordcomputer kann aufgrund weiterer gemessener Daten, insbesondere der Geschwindigkeit, berechnen, wann sich die Höhe der boden- und/oder pflanzenbearbeitenden Geräteteile des landwirtschaftlichen Gerätes verändern wird, wobei auf die im Speicherelement hinterlegten Daten des Satellitennavigationssystems, insbesondere auf die digitalisierte Karte, zurückgegriffen wird. Dadurch ist durch den Bordcomputer zu angemessener Zeit eine Steuerung und/oder Regelung der betreffenden Betriebsparameter einleitbar. Die Steuerung und/oder Regelung kann dabei vor und/oder während des Überfahrens der landschaftlichen Merkmale erfolgen. Dadurch kann die Bearbeitung der landwirtschaftlichen Fläche in besonders vorteilhafter Weise erfolgen, da an jedem Ort auf der landwirtschaftlichen Fläche die Betriebsparameter den gewünschtem Ergebnis anpassbar sind. Dazu zählen beispielsweise:
- die Höhe, in der zu mähende Pflanzen und/oder Getreide gemäht werden
- die Höhe, aus der Mittel aus Ausbringdüsen auf Pflanzen oder den Boden ausgebracht wird, wodurch ein gleichmäßigeres und/oder dem gewünschten Ausbringprofil angepasstes Ausbringen von Mittel erreichbar ist
- die Höhe, aus der Mittel von Schleuderscheiben ausgebracht wird, wodurch ein gleichmäßigeres und/oder dem gewünschten Ausbringprofil angepasstes Ausbringen erreichbar ist
- andere Ergebnisse landwirtschaftlicher Arbeit, die direkt und/oder indirekt mit der Höhe boden- und/oder pflanzenbearbeitender Geräteteile zusammen hängen

Weiterhin sind die Steuer- und/oder Regelvorgänge der Betriebsparameter des landwirtschaftlichen Gerätes optimierbar, wenn zusätzlich die Messdaten von Sensoren, insbesondere Neigungs- und/oder Ultraschallsensoren und/oder optischen Sensoren, zur Bestimmung der Höhe der boden-und/oder pflanzenbearbeitenden Geräteteile verwendet werden. Mögliche Ungenauigkeiten der digitalisierten Karte sind aufgrund der Messdaten der Sensoren verminderbar. Werden derartige Sensoren verwendet, so ist die Steuerung und/oder Regelung der Betriebsparameter mittels der digitalisierten Karte als Grobsteuerung und die Steuerung und/oder Regelung der Betriebsparameter mittels der Messdaten der Sensoren als Feinsteuerung durchführbar. Die Grobsteuerung kann dabei zeitversetzt oder zeitgleich mit der Feinsteuerung erfolgen.

In einer vorteilhaften Ausführung der Erfindung sind zuvor aufgezeichnete Daten des Satellitennavigationssystems verwendbar, während gleichzeitig neue Daten aufzeichenbar sind. Dadurch kann bei jeder Bearbeitung der landwirtschaftlichen Fläche ein aktueller Datensatz angelegt werden, so dass bei jeder nachfolgenden Bearbeitung der landwirtschaftlichen Fläche auf die neuesten und damit genauesten Daten zurückgegriffen werden kann.

Die eigenständige Aufzeichnung von Daten mittels eines Satellitennavigationssystems ist im Vergleich zum Ankauf kommerzieller Daten besonders vorteilhaft, da so jederzeit ohne Verzögerung und ohne weitere Kosten auf die aktuellen Gegebenheiten auf der landwirtschaftlichen Fläche reagiert werden kann.

In einer vorteilhaften Ausführung der Erfindung sind die aufgezeichneten Daten des Satellitennavigationssystems über geeignete Mittel auf beliebige andere landwirtschaftliche Geräte übertragbar. Auf den beliebigen anderen landwirtschaftlichen Geräten sind sie dann in analoger Form zur Steuerung und/oder Regelung der Betriebsparameter in zuvor beschriebener Weise verwendbar.

Weiterhin sind in einer vorteilhaften Ausführung auch Daten verwendbar, die beispielsweise kommerziell erwerbbar sind. Weitere Einzelheiten der Erfindung sind der nachfolgenden Beispielsbeschreibung zu entnehmen.

Im Folgenden wird die Verwendung der Erfindung bei einer landwirtschaftlichen Feldspritze beschrieben, wobei die Daten der digitalisierten Karte aus der früheren Bearbeitung der landwirtschaftlichen Fläche mit einem anderen landwirtschaftlichen Gerät stammen.

Die Betriebssteuerung der verwendeten landwirtschaftlichen Geräte, insbesondere der später erwähnten landwirtschaftlichen Feldspritze, erfolgt basierend auf den im Speicherelement eines Bordcomputers hinterlegten Daten, wobei auf zumindest ein im Bordcomputer hinterlegtes Programm zurück gegriffen wird.

Bei der Bearbeitung einer landwirtschaftlichen Fläche, z.B. bei der Aussaat von Saatgut mittels einer Drillmaschine, werden mittels Satellitennavigationssystems, z.B. GPS, Daten aufgezeichnet. Insbesondere wird ein Höhenprofil der bearbeiteten landwirtschaftlichen Fläche aufgezeichnet. Die aufgezeichneten Daten werden in einem Speicher des Bordcomputers der Drillmaschine hinterlegt.

Die aufgezeichneten Daten werden über geeignete Mittel, beispielsweise ein Bus-System und/oder ein drahtloses Übertragungssystem, auf den Speicher des Bordcomputers der Feldspritze übertragen. Alternativ kann in gleicher Weise auch kommerziell erworbenes Datenmaterial auf den Speicher des Bordcomputers übertragen werden. Der Vorteil der selbst aufgezeichneten Daten liegt in den geringen Investitionskosten und der großen Aktualität.

Aufgrund der im Speicher des Bordcomputers hinterlegten Daten wird die Feldspritze vor dem Erreichen der Grenze der zu bearbeitenden landwirtschaftlichen Fläche an entsprechend berechnetem Ort in Betrieb genommen. Das Spritzmittel erreicht die Ausbringdüsen dadurch zumindest annähernd zu dem Zeitpunkt, zu dem sich die Ausbringdüsen über der landwirtschaftlichen Fläche befinden. So wird die gesamte landwirtschaftliche Fläche, einschließlich der Feldränder, bearbeitbar.

Bei der Fahrt über die landwirtschaftliche Fläche berechnet der Bordcomputer aufgrund der in seinem Speicher hinterlegten Daten und gemessener Daten, insbesondere der Geschwindigkeit, ob und wann ein Anheben, Absenken und/oder Kippen eines und/oder beider Spritzgestänge erfolgen muss, um die Einflüsse von Bodenunebenheiten auszugleichen, so dass immer ein möglichst gleicher Abstand der Ausbringdüsen zum Boden und/oder den auf der landwirtschaftlichen Fläche befindlichen Pflanzen eingehalten wird. Dementsprechend erfolgt eine der Situation angemessene Steuerung der Spritzgestänge der Feldspritze. Dabei wird insbesondere auf das in den Daten enthaltene Höhenprofil der landwirtschaftlichen Fläche zurück gegriffen, so dass die Betriebssteuerung von Betriebsparametern der Feldspritze, insbesondere der Ausrichtung eines und/oder beider Spritzgestänge durch Anheben, Absenken und/oder Kippen, die auf dem Abstand von zumindest einem Teil der Feldspritze zum Boden abhängen, in geeigneter Weise mittels zumindest eines im Bordcomputer hinterlegten Programms durchgeführt wird.

Zusätzlich wird auf die Messdaten von Sensoren, insbesondere Neigungs- und/oder Ultraschallsensoren und/oder optische Sensoren, zurück gegriffen, um eine noch feinere Steuerung der Spritzgestänge zu erreichen. Insbesondere aufgrund der höheren Empfindlichkeit derartiger Sensoren gegenüber einem Satellitennavigationssystem ist eine Ausführung der Erfindung mit diesen Sensoren vorteilhaft. Dabei sind die Messdaten der Sensoren dazu verwendbar, die Vorregulierung basierend auf den Höhenprofildaten nachträglich zeitnah zu verfeinern. Die Messdaten der Sensoren sind aber auch gleichzeitig mit den Höhenprofildaten verwendbar.

Beim Verlassen des Feldes wird der Spritzvorgang mit Hilfe des im Speicher des Bordcomputers hinterlegen digitalisierten Kartenmaterials so beendet, dass außerhalb der Feldgrenzen kein Mittel mehr ausgebracht wird. Auf diese Weise wird verhindert, dass Mittel verschwendet wird und gleichzeitig wird die Umwelt geschont. Dieser Vorgang ist nicht vom Abstand eines Bestandteiles der Feldspritze vom Boden abhängig. Dabei wird also nicht auf das in den Daten hinterlegte Höhenprofil, sondern auf die in den Daten hinterlegte Form und Fläche der landwirtschaftlichen Fläche, die die Feldgrenzen und/oder den zu bearbeitenden Bereich der landwirtschaftlichen Fläche beschreiben, zurück gegriffen.

Während der Arbeit auf der landwirtschaftlichen Fläche wurden durch das Satellitennavigationssystem im Speicher des Bordcomputers neue Datensätze mit Informationen über die abgearbeitete Fläche angelegt. Diese können beispielsweise bei späteren Arbeitsgängen mit der Feldspritze und/oder mit einem anderen landwirtschaftlichen Gerät, auf das die Daten übertragen werden, verwendet werden. Analog dazu sind auch kommerziell erworbene Datensätze in das Speicherelement der Feldspritze und/oder anderer landwirtschaftlichen Geräte übertragbar.

## Patentansprüche

1. Landwirtschaftliches Gerät, ausgestattet mit einem Satellitennavigationssystem, z.B. GPS, aufweisendes Bordcomputersystem zur Aufzeichnung und/oder Aufnahme von Daten, insbesondere eines Höhenprofils der zu bearbeitenden landwirtschaftlichen Fläche, und zur abrufbaren Speicherung der Daten, insbesondere des Höhenprofils der Fläche, in einem Speicherelement des Bordcomputersystems, und mit Sensoren, insbesondere Neigungs- und/oder Ultraschallsensoren und/oder optischen Sensoren, zur Bestimmung der Höhe der boden-und/oder pflanzenbearbeitenden Geräteteile, wie Mähwerk und/oder Materialverteilvorrichtung, über dem Boden zur Regulierung von Betriebsparametern, **dadurch gekennzeichnet, dass** die Daten, insbesondere über das Höhenprofil der Fläche, bei dem Einsatz desselben oder anderer landwirtschaftlicher Geräte auf der landwirtschaftlichen Fläche verwendbar sind, auf der die Betriebssteuerung desselben oder anderer landwirtschaftlicher Geräte aufgrund eines im Speicher des Bordcomputersystems hinterlegten Programms durchführbar ist, wobei das verwendete landwirtschaftliche Gerät, zumindest einen Betriebsparameter aufweist, der auf dem Abstand zumindest eines Teils des landwirtschaftlichen Gerätes zum Untergrund beruht.

2. Landwirtschaftliches Gerät nach Anspruch 1, **dadurch gekennzeichnet, dass** nach einer Vorregulierung der Betriebsparameter basierend auf den Höhenprofildaten eine Nachregulierung der Betriebsparameter basierend auf den ermittelten Messdaten der Sensoren, z.B. Neigungs- und/oder Ultraschallsensoren und/oder optischen Sensoren, vornehmbar ist.

3. Landwirtschaftliches Gerät nach Anspruch 1, **dadurch gekennzeichnet, dass** gleichzeitig eine Regulierung der Betriebsparameter basierend auf den Höhenprofildaten und eine Regulierung der Betriebsparameter basierend auf den ermittelten Messdaten der Sensoren, z.B. Neigungs- und/oder Ultraschallsensoren und/oder optischen Sensoren, vornehmbar ist.

4. Landwirtschaftliches Gerät nach zumindest einem der vorangehenden Ansprüche, **dadurch gekennzeichnet, dass** eine Steuerung und/oder Regelung von der Höhe über dem Boden unabhängiger Betriebsparameter basierend auf den aufgezeichneten Daten vornehmbar ist.

5. Landwirtschaftliches Gerät nach zumindest einem der vorangehenden Ansprüche, **dadurch gekennzeichnet, dass** die aufgezeichneten Daten verwendbar sind, während gleichzeitig neue Datensätze angelegt werden.

6. Landwirtschaftliches Gerät nach zumindest einem der vorangehenden Ansprüche, **dadurch gekennzeichnet, dass** Daten zwischen verschiedenen Geräten austauschbar und/oder übertragbar sind, einschließlich der Nutzung kommerziell angebotener Datensätze.
